# EUROPEAN PATENT APPLICATION

(11) **EP 3 708 823 A1**
(43) Date of publication of application: **16.09.2020**
(21) Application number: 17931561.9
(22) Date of filing: 07.11.2017
(51) Int. Cl.: F03B 17/00, F03B 13/06, F03B 13/08

(54) **ELECTRICITY GENERATION SYSTEM USING HIGH-PRESSURE WATER EJECTION**

(71) Applicant: Choi, Ji Yeon, Seoul 08357 (KR)
(72) Inventor: Choi, Ji Yeon, Seoul 08357 (KR)
(74) Representative: RGTH
(86) International application number: PCT/KR2017/012532
(87) International publication number: WO 2019/093531

(57) **Abstract**

An electric power generation system of the present invention comprises an upper reservoir for storing water, a lower reservoir for storing water dropped from the upper reservoir, a pressure chamber for pressurizing and spouting water falling from the upper reservoir, an electric generator formed to be driven by a water turbine rotating by the spouted water and a capacitor, a preliminary power generation equipment that generates electricity using water bypassed from the upper reservoir and water supplied from the outside to charge the capacitor, and a pump that is driven by the capacitor and is formed to pump water from the lower reservoir to the upper reservoir, said electric generator includes an internal power electric generator that supplies the generated power to devices inside the system, and an external power electric generator that supplies the generated power to the outside of the system.

## Description

### [Technical Field]

The present invention relates to an electric power generation system using high pressure water ejection which purifies water flowing into the underground pit room of power plants and industries, uses water that is wasted to rivers is received in the upper tank as a power source for water turbine rotation, and use extra water to charge the battery.

### [Background Art]

Recently, due to the global climate, electricity consumption in summer and winter rapidly increase, and so power generation and securing are emerging as very important issues, and as a result, in each country, construction of electricity supply stations is being promoted in terms of securing stable power.

However, nuclear power generation has a safety risk, and thermal power generation using coal or petroleum needs to meet the requirements to strengthen environmental pollution regulations, and the supply of hydroelectricity using dams requires countermeasures against massive environmental destruction. Above all, nuclear power generation, thermal power generation, and hydroelectric power generation are large in size, and the construction period is very long, so it is inevitable to meet the demands of electric power right now.

In addition, the pumping station currently in operation is less competitive in power generation costs. and it is a huge construction cost and environmental destruction factor in construction. As a result, the necessity and availability of small-scale electricity supply facilities that can meet the current power demands are increasing.

Normally, small-scale electricity supply facilities are installed directly in the vicinity of industrial facilities that consume a lot of electricity, so large-scale power infrastructures such as nuclear power, thermal power, hydropower, and pumping-storage generator are not required. Before nuclear power plants thermal power plants and pumping stations are built, they will be able to meet the immediate power needs.

One such small-scale electricity supply equipment is a pumping electricity supply system. Typically, a pumping electricity supply system is a method in which electricity is produced by pumping water from a reservoir or a river and using the pumped water as a drop in water turbines.

### [Prior Art Document]

### [Patent Documents]

(Patent Document 1) Korean Patent Publication 10-2012-0003791 (January 11, 2012)

### [Disclosure]

### [Technical Problem]

An object of the present invention is to provide an electric power generation system that can utilize the power generated by recycling the water of the pit wasted in power plants and industries as its own power for driving the system.

### [Technical Solution]

In order to achieve the above object, an electric power generation system according to an embodiment of the present invention comprises an upper reservoir for storing water, a lower reservoir for storing water dropped from the upper reservoir, a pressure chamber for pressurizing and spouting water falling from the upper reservoir, an electric generator formed to be driven by a water turbine rotating by the spouted water and a capacitor, a preliminary power generation equipment that generates electricity using water bypassed from the upper reservoir and water supplied from the outside to charge the capacitor, and a pump that is driven by the capacitor and is formed to pump water from the lower reservoir to the upper reservoir, said electric generator includes an internal power electric generator that supplies the generated power to devices inside the system, and an external power electric generator that supplies the generated power to the outside of the system. According to an embodiment of the present invention, the electric generator comprises an ultra-rotating motor driven by receiving power from the capacitor and an output shaft that is formed to be driven by the ultra-rotating motor and the water turbine and rotates in engagement with the rotating shafts of the internal power generator and external power generator.

According to another embodiment of the present invention, the ultra-rotating motor is formed to be driven when the output shaft is below a predetermined rotational speed.

### [Effects of the invention]

According to the present invention, the electric power generation system using high pressure water ejection of the present invention is equipped with an equipment that pumps waste water from the underground pit of power plants and industries into the upper reservoir, and an equipment that is used as a power source for power generation equipment by switching to bypass, when the amount of water in the upper reservoir is maximized, and so the extra electricity produced by the system can be used as a restart power source.

In addition, by pumping water with inexpensive late-night electricity, it has the beauty of a waterfall where a certain amount of water is circulated continuously, through this, the capacitor can be charged and used as an internal power supply.

In addition, according to the present invention, electricity output from some generators is used as a power source for a system internal device such as an water turbine rotation speed control pump, and the electricity output from some other generators can also be provided externally through an external power supply. Through this, it is possible to improve the efficiency of the electric power generation system.

### [Description of Drawings]

Fig. 1 a conceptual diagram of an electric power generation system using high pressure water ejection according to the present invention.
Figure 2 is a detailed configuration of the hyper-rotating motor, loader, gear of the water high-pressure injection electric power generation system according to the present invention.
Figure 3 is a detailed configuration of the speed control pump, water turbine, water tank, underwater pump of the water high-pressure injection electric power generation system according to the present invention.
Figure 4 is a detailed configuration of the electricity suppliers of the electric power generation system using high-pressure water ejection according to the present invention.
Fig. 5 is a conceptual diagram illustrating the initial startup electricity supply of an electric power generation system using high-pressure water ejection according to the present invention.
Fig. 6 is a conceptual diagram explaining the method of supplying pumped electricity to an electric power generation system using high-pressure water ejection according to the present invention.

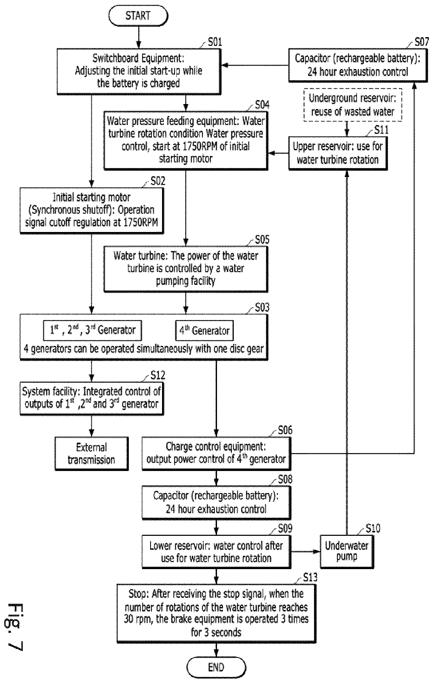

Fig. 7 is a flow chart illustrating the driving mechanism of an electric power generation system using high-pressure water ejection according to an embodiment of the present invention.

### [Mode for Invention]

Hereinafter, the embodiments of the present invention will be described in detail with reference to the attached exemplary drawings, as such an example, a person skilled in the art to which the present invention pertains may be implemented in various different forms, it is not limited to the embodiment described here.

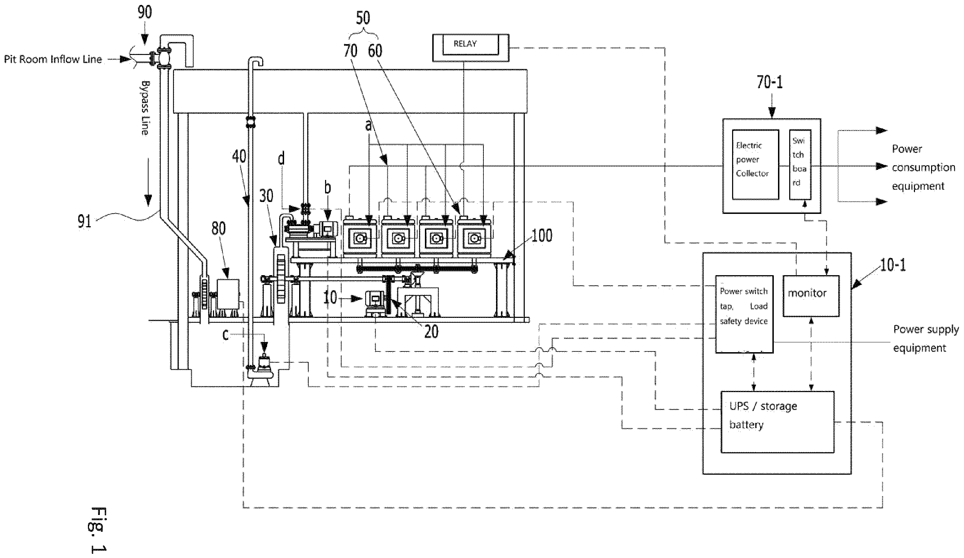

Fig. 1 shows the configuration of an electric power generation system using high-pressure water ejection according to the present embodiment.
Hereinafter, one embodiment of the electric power generation system using high-pressure water ejection may be configured as one water turbine and four-start generator electric power generation system as shown in the drawing. However, this corresponds only to one embodiment of the present invention, and if the electric power generation system to which the concept of the present invention is applied is not limited to the number of water turbine or generators, it may be included in the scope of the present invention.

In addition, the values of rotational speed or electric power described below are merely illustrative of one embodiment so that the present invention can be easily understood, and the scope of the present invention is not limited to these numerical values.

As shown in the figure, the electric power generation system using high-pressure water ejection includes a start-up unit (10) in which power generation for water circulation is performed, a transmission unit (20) in which rotational force for generating electricity is generated by operation of the start-up unit (10), a water turbine unit (30) that replaces the rotational force of the start-up unit (10) that is rotated and separated by high-pressure injection, a water transfer unit 40 for transferring water, an electricity supply unit (50), which electricity produced by the rotational power of the transmission unit (20) takes charge of its own power demand of the water high-pressure injection electric power generation system, and supplies power to external equipment, and an equipment frame (100) installed on the ground and equipped with the start-up unit (10), the transmission unit (20), the water turbine unit (30), and the electric supply unit (50), respectively.

The electric power generation system using high-pressure water ejection below is described in accordance with an electricity supply capacity of about 1400 Kw. Particularly, Of the generated power of about 1400Kw, about 350Kw is used for the self-power demand of the water high-pressure injection electric power generation system, and about 1050Kw is supplied as electricity for the operation of external facilities.

However, the electric power generation system using high-pressure water ejection according to this embodiment can be designed with an electricity supply capacity of 1400 Kw or more depending on the number of revolutions of the start-up unit (10), the water injection pressure of the water turbine unit (30), the water storage capacity of the water circulation unit (40), and the number of electricity supply units of the electric generator unit (50), and such an electricity supply capacity expansion is proved from the following description.

The start-up unit (10) is connected to a control panel (10-1) in which signal manipulation for start-up and operation control is performed. Particularly, In the start-up unit (10), an ultra-rotating motor (11) having a motor starter as a motor protection device is used, and the ultra-rotating motor (11) (Static Frequence Control Motor) gradually increases the number of revolutions and then rises to about 1,750 rpm. In this embodiment, the control panel (10-1) may include an on/off power switch, a monitor for operating status display, an external power connection for standby, and an uninterruptible power supply (UPS)/storage battery.

In the transmission unit (20), an axis for transmitting rotational force and a gear for changing the rotational direction are used. However, a belt may be applied instead of a gear to change the rotation direction.

The water turbine unit (30) is applied with a half-curve wing-type water turbine that is rotated under a water injection pressure of about 30 to 60 bar. In particular, the rotational speed of the water turbine is raised to about 1,750 rpm.

The water circulation unit (40) stores about 25 tons of water that is circulated. However, depending on the storage capacity of power plants and industrial underground feet, the water capacity to be pumped may be further increased when the electricity supply capacity exceeds about 1400 Kw. In particular, the water circulation unit (40) may further include a heating system for preventing freezing caused at temperatures below freezing point.
The electricity supply unit (50) is made of electricity to produce electricity of about 1,400Kw by rotation of the transmission unit (20). In particular, the electricity supply unit (50) includes an internal power electric generator (60) in charge of an electricity supply capacity of about 350 Kw, which is used as a self-power demand of the high-pressure injection electric power generation system of water among about 1,400 Kw of power, and an external power electric generator (70) in charge of the electricity supply capacity of about 1,050Kw used as electricity for operating external facilities.

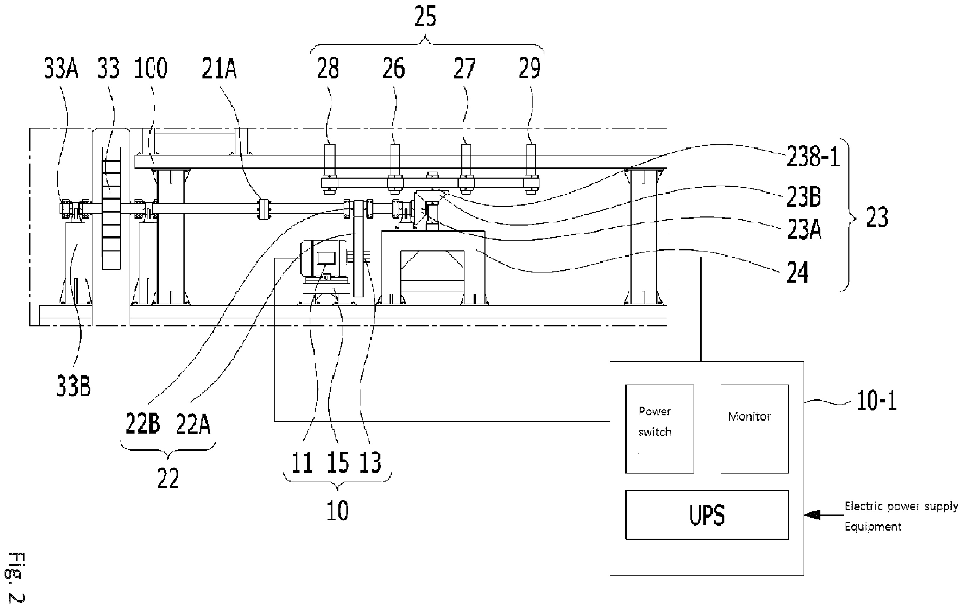

The internal power supply (60) is equipped with a built-in equipment power panel (60A), and the built-in equipment power panel (10-1) constitutes an electric circuit as a power consumption equipment of the water high-pressure injection electric power generation system. In addition, the external power electricity supplier (70) includes an external equipment power panel (70-1), and the external equipment power panel (70-1) constitutes an electric circuit as an external equipment where power is supplied. In the present embodiment, the built-in equipment power panel (10-1) includes a relay for interrupting power, and the external equipment power panel (70-1) may include a current collector for storing power and a distributor for distributing power.
On the other hand, Figure 2 is a detailed configuration of the start-up unit (10) and the transmission unit (20). As shown, the start-up unit (10) includes an ultra-rotating motor (11), a speed sensor (13), and a motor support frame (15).

When the ultra-rotating motor (11) (Static Frequence Control Motor) is operated, the initial rotational speed of the operation is gradually increased, and after reaching the maximum of about 1,750 rpm, it is separated from the shaft and stopped. Therefore, in the ultra-rotating motor (11), a signal for operating or separating and stopping at the shaft may be made on or off of the control panel (10-1) and in addition, the ultra-rotating motor (11) can be supplied with external power through the control panel (10-1) during operation, and can be used as a UPS/battery power source.

Said speed sensor (13) detects that the number of revolutions of the ultra-rotating motor (11) reaches about 1,750 rpm. Therefore, the speed sensor (13) can be installed as a motor shaft portion of the ultra-rotating motor (11), and the detection signal of the speed sensor (13) can be monitored on the control panel (10-1). In particular, the operator can stop the ultra-rotating motor (11) with the detection signal of the speed sensor (13).

The motor support frame (15) is installed on the ground (or the floor of the building) to stably maintain the installation state of the ultra-rotating motor (11).

The transmission unit (20) is composed of a loader (21), a rotary connector (22), a rotary switch (23), and an electrical supply connector (25).
The loader (21) is made of a straight axis without bending, and particularly, it is converted into a long axis type by being connected to the coupler (21A). In this embodiment, a water turbine (35) of the water turbine unit (30) is connected to one end of the loader (21), and the first bevel gear (23A) of the rotary switch (23) is connected to the other end of the loader (21).

The rotating connector (22) is composed of a first gear (22A) and a second gear (22B) engaged with it and rotated in the opposite direction. The first gear (22A) is rotated by the motor shaft of the ultra-rotating motor (11), and the second gear (22B) transmits the rotational force of the first gear (22A) to the loader (21). Therefore, the first gear (22A) is fixed to the motor shaft of the ultra-rotating motor (11), and the second gear (22B) is fixed to the loader (21). In this embodiment, the rotating connector (22) may be composed of a pulley and a belt.

The rotation converter (23) is composed of a first bevel gear (23A) and a second bevel gear (23B) that meshes with it to change the rotation direction by 90 degrees. The first bevel gear (23A) is fixed to one end of the loader (21), and the second bevel gear (23B) is mounted with a gear support frame (24) installed on a ground (or a building floor). In particular, the second bevel gear (23B) includes a bearing-coupled mounting shaft mounted on the gear support frame (24), and an output shaft (23B-1) with gears on the outer circumferential surface is further included on the opposite side of the mounting shaft. In this embodiment, the rotary switch (23) may be composed of a pulley and a belt.

The electricity supply connector (25) is composed of four first, second, third, and fourth rotation shafts (26, 27, 28, and 29, respectively). In particular, the first and second rotation shafts (26 and 27) are respectively engaged with and rotated by the output shaft (23B-1) of the second bevel gear (23B), and the third rotation shaft (28) is engaged with the first rotation shaft (26), and The fourth rotation shaft (29) is engaged with the second rotation shaft (27). Therefore, the rotational force of the second bevel gear (23B) is transmitted to the first and second rotation shafts (26 and 27) via the output shaft (23B-1), respectively, and the rotational force of the first and second rotation shafts (26 and 27) is transmitted to the third rotation shaft (28) and the fourth rotation shaft (29), respectively.

In this embodiment, between the first rotation shaft (26) and the third rotation shaft (28) and between the second rotation shaft (27) and the fourth rotation shaft (29), a plurality of gears for transmitting rotational force and matching the rotation ratio can be further provided. Further, in this embodiment, the electricity supply connector (25) may be composed of a pulley and a belt.

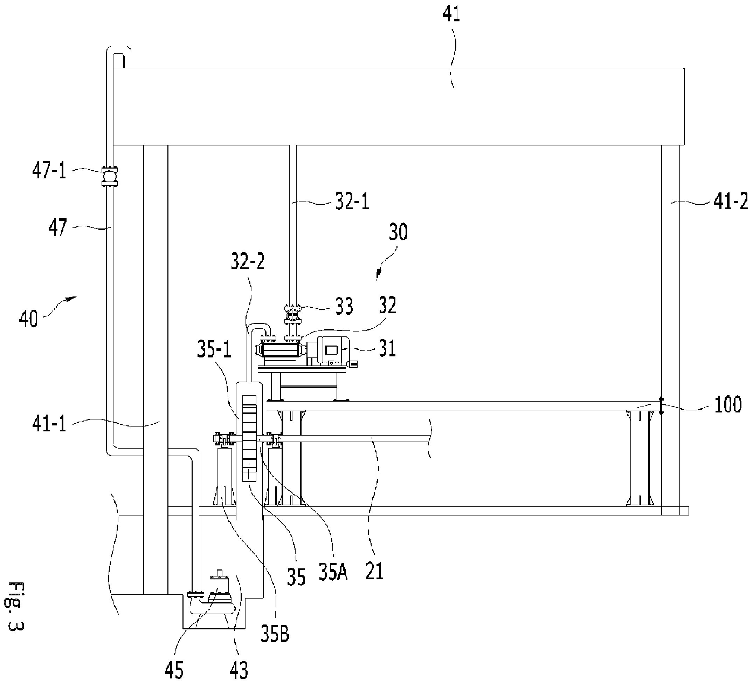

On the other hand, Figure 3 shows the detailed configuration of the water turbine unit (30) and the water circulation unit (40).
As shown, the water turbine unit (30) is composed of a speed control pump (31), a water turbine (35).

The speed control pump (31) pumps 6,100 liters of water per minute and sprays it at about 30 to 60 Bar. To this end, the speed control pump (31) is connected to a pressure chamber (32) that pressurizes water to about 30-50 Bar, and in pressure chamber (32) a water inlet line (32-1) and a high pressure discharge line (32- 2) is connected, and an shutoff valve (33) for On/Off is installed in the water inflow line (32-1). In this embodiment, the speed control pump (31) is installed in the installation frame (100).

The water turbine (35) is installed in a high pressure discharge line (32-2) sprayed at about 30-60 Bar and a subsequent water turbine chamber (35-1), and is provided with a water turbine shaft (35A) supported by a water turbine support post (35B) installed on a ground (or a floor of a building) outside the water turbine chamber (35-1). The water turbine shaft (35A) is connected to the loader (21) of the transmission unit (20). The water turbine shaft (35A) and the loader (21) may be connected by a coupler.

In particular, the water turbine (35) is equipped with a semi-curved wing and is rotated to about 1,750 rpm at a water injection pressure of about 30 to 60 bar that hits the semi-curved wing.

The water circulation unit (40) is composed of an upper reservoir (41), a lower reservoir (43), and an underwater pump (45).

The upper reservoir (41) is positioned at a predetermined height from the ground (or floor) by being supported by first and second reservoir support posts (41-1 and 41-2) installed on the ground (or building floor). In this embodiment, the water storage capacity of the upper reservoir (41) allows about 25 tons, and a heating system that prevents freezing due to cold may be further provided.

Water flows into the lower reservoir (43) through the pit chamber inlet line, and water stored in the lower reservoir (43) is supplied to the upper reservoir (41) through an underwater pump (45). When the storage capacity of the upper reservoir (41) reaches the maximum value, water is bypassed through the bypass line (91) to rotate the water turbine of the preliminary power generation equipment (80) to charge the UPS/battery.

The lower reservoir (43) is formed below the ground (or the floor of the building) to rotate the water turbine (35) and the falling water is stored. In this embodiment, the water storage capacity of the lower reservoir (43) allows about 3 tons, and a heating system that prevents freezing due to cold weather may be further provided.

The under water pump (45) in the lower reservoir, which is the preliminary equipment, installed in the lower reservoir (43) to pump with 6,100 liters of water per minute and make the water in the lower reservoir (43) to be fed back to the upper reservoir (41), through this, the stored water is circulated from the upper reservoir (41) to the lower reservoir (43).

To this end, a return line (47) extending from the lower reservoir (43) to the upper reservoir (41) is installed in the underwater pump (45) in the lower reservoir, which is a preliminary equipment. Particularly, a check valve (47-1) is installed in the return line (47) to prevent water from the upper reservoir (41) from flowing down to the lower reservoir (43).

In this embodiment, the water inlet line (32-1), the high pressure discharge line (32-2), the water turbine chamber (35-1), and the return line (47) leading from the lower reservoir (43) to the upper reservoir (41) are composed as a water transfer line.

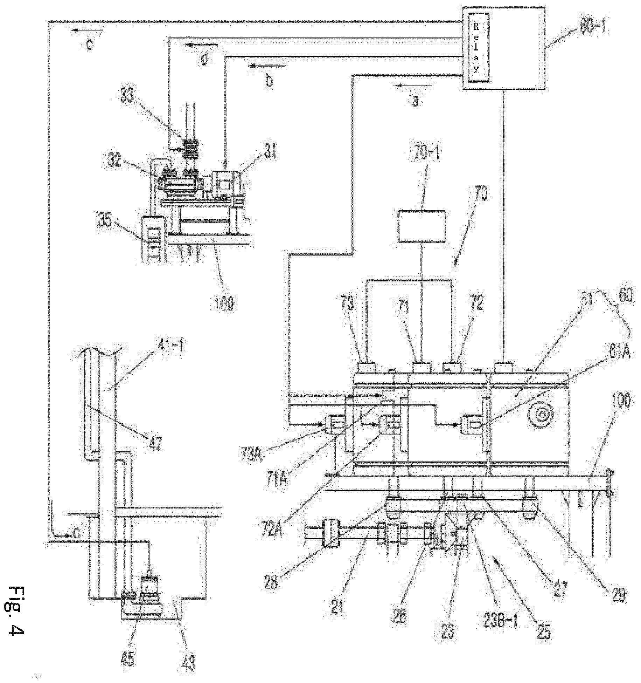

Meanwhile, FIG. 4 shows a detailed configuration of the internal power electric generator (60) and the external power electric generator (70) constituting the electric power generation unit (50).

As shown, the internal power electric generator (60) is composed of a first electric generator (61) having an electricity supply capacity of about 350Kw, the power for electricity supply is received from the fourth rotation shaft (29) among the electric generator connector (25) of the transmission unit (20). In addition, the first electric supply (61) is provided with a cooling fan (61A) to prevent internal heat rise.

The external power electric generator (70) is composed of second, third, and fourth electric generators (71, 72, 73), each having an electricity supply capacity of about 350 Kw, the power for supplying electricity is received from the first, second, and third rotation shafts (26, 27, 28) of the electric generator connector (25) of the transmission unit (20). In addition, the second, third, and fourth electric generators (71, 72, and 73) are provided with cooling fans (71A, 72A, and 73A), respectively, thereby preventing internal heat rise.

In this embodiment, the first, second, third, and fourth electric generators (61, 71, 72, and 73) are installed in the equipment frame (100). In particular, the power generated by the first electric generator (61) is supplied to the speed control pump (31), the shut-off valve (33), the underwater pump (45), and the cooling fans (61A, 71A, 72A, 73A). Power supply of the first electric generator (61) may be made through the built-in equipment power panel (60-1), The built-in equipment power panel (60-1) is controlled by the control panel (10-1), and the remaining electricity can be charged to the UPS/battery. In addition, the electric power generated by the second, third, and fourth electric generators (71, 72, and 73) is supplied to an equipment in the building or an external power equipment. The power supply of the second, third, and fourth electrical supplies (71, 72, and 73) can be made through the external equipment power panel (70-1), and the external equipment power panel (70-1) is the control panel (10-1). In order to fill the exhausted water in the upper reservoir, the bypass module is released to flow into the upper reservoir.

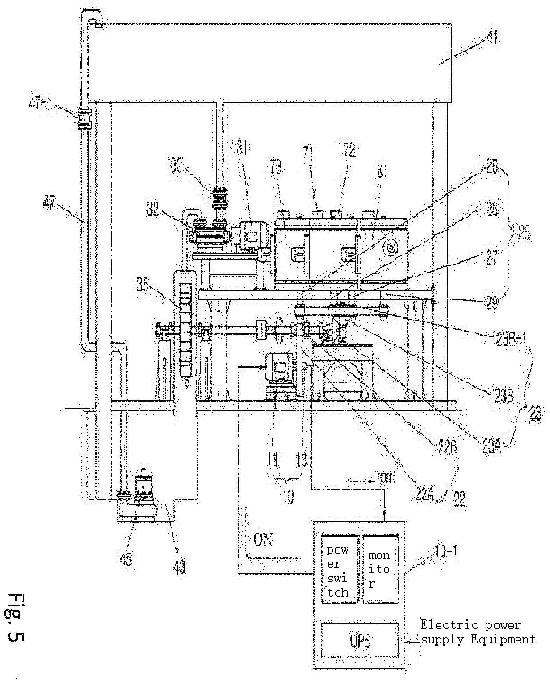

Meanwhile, FIG. 5 shows a start-up electricity supply state in which the electric power generation system using high-pressure water ejection according to the present embodiment is initially operated, and an equipment operated for start-up electricity supply is referred to as a start-up electricity supply device.

As shown in the figure, when entering the start-up electricity supply state, the ultra-rotating motor (11) is gradually powered from a low-speed rotation to a high-speed rotation by a motor starter by supplying power with an On signal, and then up to about 1,750 rpm Is reached. As the rotation of the ultra-rotating motor (11) is transmitted to the loader (21), the number of revolutions of the loader (21) increases like the ultra-rotating motor (11), and so reaches a maximum of about 1,750 rpm.

At this time, the rotational force transmission of the ultra-rotating motor (11) and the loader (21) is made of first and second gears (22A and 22B) or belts connecting them.

Subsequently, the rotation of the loader (21) is transmitted to the first bevel gear (23A), and the rotation of the first bevel gear (23A) is transmitted to the second bevel gear (23B) engaged therewith, thereby changing the rotation direction by 90 degrees. The rotational force of the second bevel gear (23B) is transmitted to the first and second rotation shafts(26 and 27) meshed with the output shaft (23B-1) of the second bevel gear (23B), respectively, thereby being converting to rotation of the first and second rotation shafts (26, 27), the third and fourth rotation shafts (28 and 29) are rotated by rotating the first and second rotation shafts (26 and 27), respectively.

Then, the fourth rotation shaft (29) rotates the first electric generator (61) and at the same time, the first, second, and third rotation shafts (26, 27, and 28) rotate the second, third, and fourth electric generators(71,72, and 73), respectively, thereby providing electricity in the first, second, third, and fourth electric generators(61, 71, 72, and 73), respectively.

The start-up electricity supply as described above comprises the process of the rotation of the ultra-rotating motor (11) -> rotation of the first and second gears (22A and 22B) -> rotation of the loader (21) → rotation and direction change of the first and second bevel gears (23A and 23B) → rotation of the first and second rotation shafts (26 and 27) → rotation of the third and fourth rotation shafts (28 and 29) → electricity supply of the first, second, third and fourth electric generators (61, 71, 72, and 73), and this process is performed through the ultra-rotating motor (11).

This start-up electricity supply is continued until the number of revolutions of the ultra-rotating motor (11) reaches about 1,750 rpm, then the rotational force of the water turbine (35) rotated by water circulation by the first electric generator (61) is stopped after the stoppage of the ultra-rotating motor (11) is made by replacing the rotational force of the ultra-rotating motor (11). In this embodiment, the electricity supply process after the startup electricity supply is defined as an electricity generation system using high-pressure water ejection.

To this end, detection of about 1,750 rpm of the ultra-rotating motor (11) is detected by the speed sensor (13), and the detection signal of the speed sensor (13) is provided to the control panel (10-1), thereby providing the stop of operation of an ultra-rotating motor (11) by the operator.

However, the stop of the ultra-rotating motor (11) may be achieved by the ultra-rotating motor (11) itself, which itself detects the arrival of about 1,750 rpm.

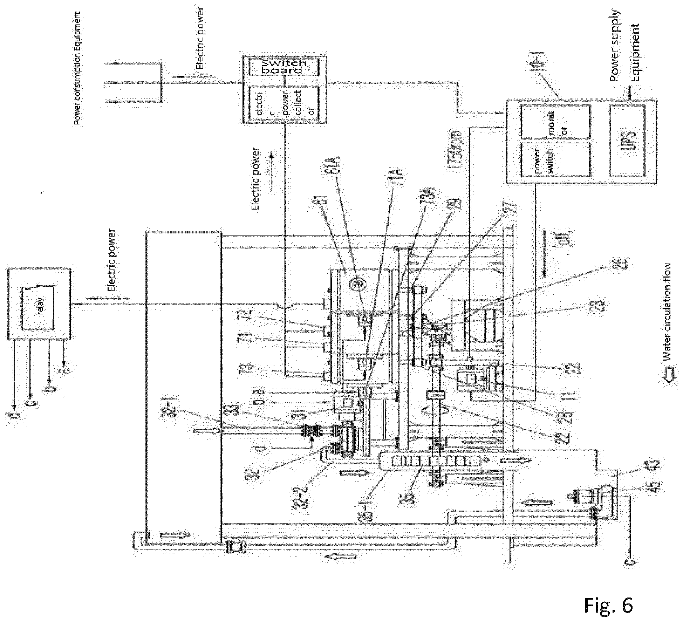

FIG. 6 shows the state of electricity supply using water transfer after the start-up electricity supply of the electric power generation system using high-pressure water ejection according to the present embodiment, and an equipment operated for electricity supply is referred to as a transfer electricity supply device.

As shown, when the transfer electricity supply is made, in the first electric generator (61), a first power source (a) for operation of the cooling fans (61A, 71A, 72A, and 73A), a second power source (b) for operation and the speed control pump (31), a third power source (c) for operation of the underwater pump (45), and a fourth power source (d) for opening of the shut-off valve (33) are supplied, water is transferred to the upper reservoir (41) and the lower reservoir (43) through the use of such self-power, by being rotated at a pressure of about 30 to 60 bar that applies water from the upper reservoir to the water turbine (35), the water turbine (35) replaces the rotational force of about 1,750 rpm provided by the ultra-rotating motor (11).

In one example, the shut-off valve (33) is opened so that the water in the upper reservoir (41) flows into the pressure chamber (32) through the water inlet line (32-1), In the pressure chamber (32), the pressure of about 30-50 bar is applied to the water by the operation of the speed control pump (31), water, which has been subjected to a pressure of about 30 to 60 bar, passes through the high pressure discharge line (32-2), and then falls into the lower reservoir (43) while striking the water turbine (35) installed in the water turbine chamber (35-1).

In this process, water having a pressure of about 30 to 60 bar and descending from the upper reservoir (41) to the lower reservoir (43) continuously hits the water turbine (35), and as a result, the rotational speed of the water turbine (35) continues to rise. By doing so, it goes up to about 1,750 rpm.

Then, the loader (21) connected to the water turbine (35) is rotated through the water turbine (35) at about 1,750 rpm, so that the rotation through the water turbine (35) is continued even in the state in which the ultra-rotating motor (11) is stopped.

Subsequently, the rotation of the loader (21) continuously rotates the first bevel gear (23A), the rotation of the first bevel gear (23A) is continuously transmitted to the second bevel gear (23B) engaged therewith, so that the first, second, third, and fourth rotation shafts (26,27,28,29) are continuously rotated, rotation of the first, second, third and fourth rotation shafts (26, 27, 28 and 29) continues to supply electricity to the first, second, third and fourth electric generators (61, 71, 72 and 73), and so in the shutdown state of the ultra-rotating motor (11), the water turbine-rotating speed pump is switched to the UPS/battery electricity supply in which the start-up continues.

In this process, when water is exhausted from the upper reservoir (41), the water pumped from the power plant and the industrial pit is filled with water by opening the shut-off valve of the inflow line. In addition, the upper reservoir (41) is filled and the preliminary power generation equipment (80) is turned using the bypassed water to charge the UPS/battery using the electricity generated there. Using the electricity charged in the UPS/battery, the underwater pump (45) of the lower reservoir (43) is operated to return the water collected in the lower reservoir (43) to the upper reservoir (41) again. In addition, the operation of the cooling fans (61A, 71A, 72A, and 73A) cools the first, second, and third electric generators (61, 71, 72, 73), respectively, and so the first, second, third, and fourth electric generators. (61,71,72,73) can supply electricity stably without the risk of overheating.

Therefore, the electricity supply as described above comprises the process of water injection with high pressure → rotation of the water turbine (35) → rotation of the loader (21) → rotation and direction change of the first and second bevel gears (23A and 23B) → rotation of the first and second rotation shafts (26,27) → rotation of the third and fourth rotation shafts (28,29) → electricity supply of the first, second, and third electric generators (61,71,72,73) → water transfer, this process is performed by stopping the operation of the ultra-rotating motor (11) and supplying power through the first electric generator (61).

Therefore, in the first, second, third, and fourth electric generators (61, 71, 72, and 73), electric power can be generated when supplying electricity through startup or supplying electricity through pumping.

The power generated by the first electric generator (61) is supplied to a speed control pump (31), a shut-off valve (33), an underwater pump (45), and cooling fans (61A, 71A, 72A, 73A). Power supply of the first electric generator (61) can be made through the built-in equipment power panel (60-1), The built-in equipment power panel (60-1) is controlled by the control panel (10-1), and the remaining electricity is charged to the UPS/battery and used as the operating power for underwater pump (45), which is a spare equipment, and the reserve power of the internal power. In addition, the electric power generated by the second, third, and fourth electric generators (71, 72, and 73) is supplied to an equipment in the building or an external power equipment. Power supply of the second, third, and fourth electric generators (71, 72, and 73) can be made through an external equipment power panel (70-1), the external equipment power panel (70-1) may be controlled by the control panel (10-1).

As described above, the water high-pressure injection electric power generation system according to this embodiment includes the second, third, and fourth electric generator (71, 72, 73) for supplying electric power as external equipment electric power, along with a first electric generator (61) for supplying electric power as its own equipment electric power; Start-up electric supply device in which operation of the ultra-rotating motor (11) is stopped when power is supplied by the first electric generator (61), in which the rotational force of the ultra-rotating motor (11) is used to supply electricity to the first, second, third, and fourth electric generators (61, 71, 72, 73); the electric power supply device used to supply the electric power of the first, second, third, and fourth electric generators (61, 71, 72, 73), instead of the ultra-rotating motor (11), with the rotational force of the water turbine (35) rotated by the high-pressure injection, after high-pressure injection is performed in which the injection pressure of water self-transmitted to the speed control pump (31) operated by the electric power of the first electric generator (61) is increased;, thereby due to the non-association with large-scale reservoirs or rivers, it is eliminated without the local limitations of self-supply electricity supply facilities, particularly, it is possible to downsize electricity generation facilities by continuing to supply electricity by transporting a certain amount of water along with the electricity generation facilities.

### Description of codes]

10: Start-up unit
10-1: Control panel
11: Ultra-rotating motor
13: Speed sensor
15: Motor support frame
20: Transmission unit
21: Loader
21A: Coupler
22: Rotary coupler
22A: The first gear
22B: The second gear
23: Rotation switch
23A: The 1st bevel gear
23B: The 2nd bevel gear
23B-1: Output shaft
24: Gear support frame
25: electrical generator connector
26: The first rotation shaft
27: The second rotation shaft
28: The third rotation shaft
29: The fourth rotation shaft
30: Water turbine unit
31: speed control pump
32: pressure chamber
32-1: Water inflow line
32-2: High pressure discharge line
33: shut-off valve
35: Water turbine
35A: Water turbine shaft
35B: Water turbine support post
35-1: Water turbine chamber
40: Water transfer unit
41: Upper reservoir
41-1: The first reservoir support post
41-2: The second reservoir support post
43: Lower reservoir
45: Underwater pump
47: Return line
47-1: Check valve
50: Electricity supply unit
60: Internal power electric generator
60-1: Built-in equipment power panel
61: The first electric generator
61A, 71A, 72A, 73A: Cooling fan
70: External power electric generator
70-1: External equipment power panel
71,72,73: The second, third and fourth electric generator
100: Equipment frame

## Claims

1. An electric power generation system comprising:
an upper reservoir for storing water;
a lower reservoir for storing water dropped from the upper reservoir;
a pressure chamber for pressurizing and spouting water falling from the upper reservoir;
an electric generator formed to be driven by a water turbine rotating by the spouted water and a capacitor; a preliminary power generation equipment that generates electricity using water bypassed from the upper reservoir and water supplied from the outside to charge the capacitor; and
a pump that is driven by the capacitor and is formed to pump water from the lower reservoir to the upper reservoir,
wherein said electric generator includes an internal power electric generator that supplies the generated power to devices inside the system; and an external power electric generator that supplies the generated power to the outside of the system.

2. The electric power generation system according to claim 1, comprising an ultra-rotating motor driven by receiving power from the capacitor; and
an output shaft that is formed to be driven by the ultra-rotating motor and the water turbine and rotates in engagement with the rotating shafts of the internal power generator and external power generator.

3. The electric power generation system according to claim 2, wherein the ultra-rotating motor is formed to be driven when the output shaft is below a predetermined rotational speed.
